# EUROPEAN PATENT SPECIFICATION

(11) **EP 1 536 186 B1**
(45) Date of publication and mention of the grant of the patent: **26.07.2006**
(21) Application number: 04028119.8
(22) Date of filing: 26.11.2004
(51) Int. Cl.: F24F 11/00, F24F 3/06, F25B 49/02, F25B 13/00

(54) **Air conditioner**
Klimaanlage
Conditionneur d'air

(30) Priority: 26.11.2003 JP 2003394870
(43) Date of publication of application: 01.06.2005
(73) Proprietor: Hitachi Air Conditioning Systems Co., Ltd., Chiyoda-ku, Tokyo (JP)
(72) Inventor: Nagamatsu, Shinichiro c/o Shimizu Works Hitachi, Shizuoka-shi Shizuoka-ken 424-0926 (JP); Katsumata, Naoto c/o Shimizu Works Hitachi, Shizuoka-shi Shizuoka-ken 424-0926 (JP); Endo, Takeshi c/o Shimizu Works Hitachi, Shizuoka-shi Shizuoka-ken 424-0926 (JP); Kawaguchi, Hiroyuki c/o Shimizu Works Hitachi, Shizuoka-shi Shizuoka-ken 424-0926 (JP)
(74) Representative: Beetz & Partner

(56) References cited:
- EP-A- 0 410 570
- EP-A- 0 543 622
- US-A1- 2003 037 555
- PATENT ABSTRACTS OF JAPAN vol. 1998, no. 09, 31 July 1998 (1998-07-31) & JP 10 089744 A (RAPOOLE:KK), 10 April 1998 (1998-04-10)

## Description

### Background of the invention

The present invention relates to an air conditioner using a vapor compression refrigeration cycle, and is preferable for what secures amenity and reliability and aims at the reduction of power consumption.

### Prior art

Heretofore, it is known to reduce power consumption by providing a demand controller and a sequencer, enabling the sequencer to control compressors of a plurality of air conditioners, and stopping one air conditioner in turn and operating the remainder. For example, this is described in patent document No. 1 (JP-A-10-89744).

The actual power consumption of an air conditioner sharply varies according to air conditioning load and surrounding air temperature in used time, and installation conditions. For example, when the surrounding air temperature is high and air conditioning load is large, the operating pressure of the air conditioner to be used rises and power consumption rises largely in comparison with that in usual time. Hence, a method of stopping an air conditioner in turn like the above-mentioned prior art spoils amenity largely.

In addition, since an air conditioner of simply stopping and rebooting a compressor increases a frequency of activations from stops of the air conditioner needlessly, the load given to the life time of a contact point of a relay and the like, which are provided between the compressor and a power supply, a fan motor, and the compressor increases. Then, since it needs time to have stable air conditioning capacity by rebooting from stopping, an operating efficiency in the meantime drops, and hence, it is contrary to energy saving.

The present invention aims at solving subjects of the above-mentioned prior art, securing maximum air conditioning capacity within a limit according to users' demand requests, i.e., the restriction of power consumption, and not spoiling amenity.

In addition, this further aims at securing reliability while aiming at the reduction of power consumption.

### Brief Summary of the invention

In order to solve the above-mentioned subjects, the present invention is that, in an air conditioner in which an outdoor unit, having a plurality of compressors, a four-way valve, heat source side heat exchangers, outdoor expanders, and outdoor blowers, and a plurality of indoor units having motor expansion valves, use side heat exchangers, and indoor blowers are connected with liquid connection piping and gas connection piping, and which controls an operation frequency of the above-mentioned compressor, an upper limit of power consumption is set beforehand, an operation frequency of at least one of the plurality of above-mentioned compressors is reduced by a predetermined control range when an operating current of the above-mentioned air conditioner is larger than a current value based on the above-mentioned upper limit.

Further, an operating number of the remainder out of the above-mentioned compressors may be reduced when an operating current of the above-mentioned air conditioner is larger than the current value based on the above-mentioned upper limit of power consumption even if the frequency becomes a lower limit of the above-mentioned operation frequency.

In addition, in the above-mentioned air conditioner, it is desirable that the plurality of above-mentioned compressors comprises a variable capacity type compressor and fixed capacity type compressors, an operation frequency of the variable capacity type compressor is reduced by a predetermined control range when an operating current of the above-mentioned air conditioner is larger than a current value based on the above-mentioned upper limit, and then, an operating number of the above-mentioned fixed capacity type compressors is reduced.

Furthermore, in the above-mentioned air conditioner, it is desirable that the plurality of above-mentioned compressors comprises a variable capacity type compressor and fixed capacity type compressors, an operation frequency of the variable capacity type compressor is reduced by a predetermined control range when an operating current of the above-mentioned air conditioner is larger than a current value based on the above-mentioned upper limit, and then, an operating number of the above-mentioned fixed capacity type compressors is reduced after waiting for a given length of time.

Moreover, in the above-mentioned air conditioner, it is desirable to shut down processing when the above-mentioned operation frequency of the above-mentioned compressor whose operation frequency is reduced becomes the lower limit and all the remainder of the above-mentioned compressors are stopped.

In addition, in the above-mentioned air conditioner, it is desirable that, when the above-mentioned air conditioner is operated with an upper limit of power consumption being set beforehand, a degree of opening of the above-mentioned motor expansion valve is made small in comparison with the case that an upper limit of power consumption is not set.

Furthermore, in the above-mentioned air conditioner, it is desirable that priority is given to the plurality of above-mentioned indoor units and degrees of opening of the above-mentioned motor expansion valves are enlarged as the priority of the indoor units is higher.

Moreover, in the above-mentioned air conditioner, it is desirable that priority is given to the plurality of above-mentioned indoor units and the priority is expressed as a demand level.

In addition, in the above-mentioned air conditioner, it is desirable that a plurality of above-mentioned air conditioners is installed, at least one of the plurality of air conditioners is operated with an upper limit of power consumption of its being set beforehand, and the above-mentioned air conditioner which is operated with the upper limit being set rotates in turn.

Furthermore, in the above-mentioned air conditioner, it is desirable that a plurality of above-mentioned air conditioners is installed, and it is indicated that it is under operation with an upper limit of power consumption being set beforehand.

According to the present invention, since it is possible to sufficiently secure air conditioning capacity with an upper limit of power consumption being set, it is possible to aim at the reduction of power consumption without spoiling amenity.

Other objects, features and advantages of the invention will become apparent from the following description of the embodiments of the invention taken in conjunction with the accompanying drawings.

### Brief description of the several views of the drawing

Fig. 1 is a block diagram of a refrigerating cycle showing one embodiment of the present invention;
Fig. 2 is a flowchart showing an operating method of compressors according to one embodiment;
Fig. 3 is a flowchart showing a control method of a motor-operated valve according to one embodiment;
Fig. 4 is a front view showing an indoor remote control according to one embodiment;
Fig. 5 is a graph showing a control method of a plurality of air conditioners according to one embodiment; and
Fig. 6 is a front view showing the display under demand execution according to one embodiment.

### Preferred embodiments of the invention

Although it is necessary to change the capacity of a compressor according to load fluctuation in order to reduce power consumption, it is not possible to balance necessary air conditioning capacity with consumed electric power to be reduced only by lowering the capacity of the compressor, which largely reduces a circulating amount of the refrigerant and leads to the decrease of reliability.

Hereafter, an embodiment of the present invention will be explained with reference to drawings.

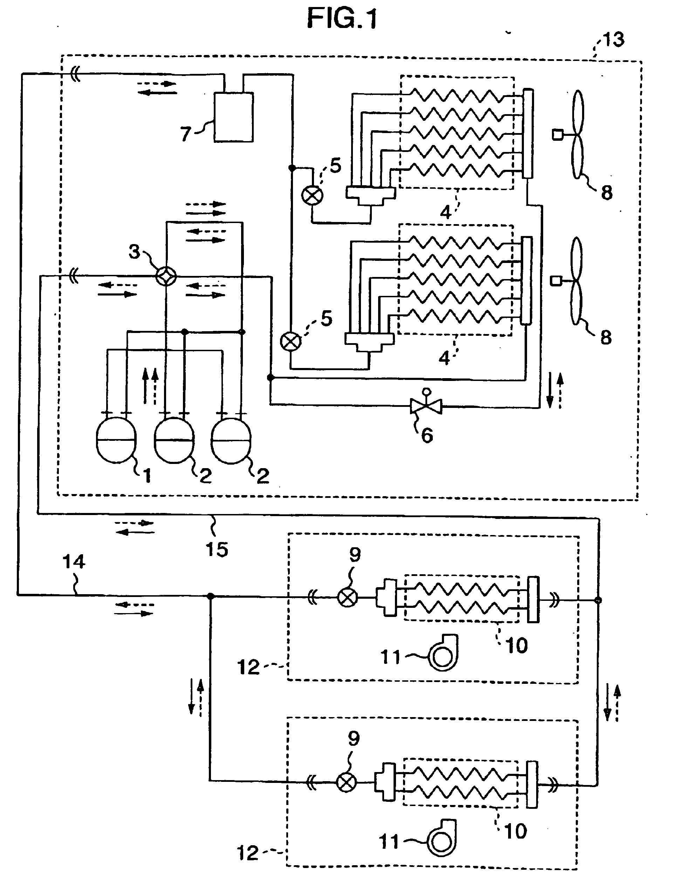

In Fig. 1, an outdoor unit 13 has a capacity variable type compressor 1, which is controlled with an operating frequency being changed by an inverter, and fixed capacity type compressors 2, and respective compressors are connected to a four-way valve 3 in parallel. The piping connection of the four-way valve 3 is made to a heat source side heat exchanger 4, and is further connected to a refrigerant amount controller 7 through outdoor expansion equipment 5 from the heat source side heat exchanger 4. In addition, reference numeral 6 denotes a motor-operated valve which switches a passage to the heat source side heat exchanger 4, and reference numeral 8 denotes an outdoor blower which ventilates the heat source side heat exchanger 4.

Further, reference numeral 9 denotes an electric expansion valve, reference numeral 10 denotes a use side heat exchanger, and reference numeral 11 denotes an indoor blower, which construct each indoor unit 12. Indoor units 12 are connected to the outdoor unit 13 with liquid connection piping 14 and gas connection piping 15. The capacity variable type compressor 1, fixed capacity type compressors 2, outdoor unit blowers 8, and indoor blowers 11 are operated, and indoor air conditioning is performed by heat exchange being made with air.

Next, the operation of this embodiment will be explained.

In the case of cooling operation, a refrigerant flows in the direction of continuous-line arrows in the diagram. The gas refrigerant which is discharged from the capacity variable type compressor 1 and fixed capacity type compressors 2 passes the four-way valve 3 and is condensed by the heat source side heat exchangers 4 which are constructed by a plurality of refrigerant passages. The condensed refrigerant enters into the refrigerant amount controller 7. The liquid refrigerant discharged from the refrigerant amount controller 7 becomes a gas-liquid two-phase flow by pressure loss according to piping length in the liquid connection piping 14 which connects the outdoor units 13 and indoor units 12, and enters into the electric expansion valves 9.

Each electric expansion valve 9 is expansion equipment in which a throttling amount can be arbitrarily set, and the refrigerant decompressed by the electric expansion valve 9 is sent to a use side heat exchanger 10 used as an evaporator, evaporates, and cools indoor air. The refrigerant evaporated passes the gas connection piping 15, and returns to inlet sides of the compressors 1 and 2.

In the case of heating operation, the refrigerant flows in the direction of dotted-line arrows in the diagram by the four-way valve 3 being switched. The refrigerant which is discharged from the capacity variable type compressor 1 and fixed capacity type compressors 2 passes the four-way valve 3 and gas connection piping 15, and dissipates heat and is condensed in the use side heat exchangers 10 to heat indoor air.

The condensate is throttled and expanded by the electric expansion valves 9, and is transferred to the outdoor units 13 inside the liquid connection piping 14 as a gas-liquid two-phase flow. The refrigerant which becomes in larger dryness by the pressure loss in the liquid connection piping 14 is sent to the heat source side heat exchangers 4. The refrigerant sent to the heat source side heat exchangers 4 evaporates and becomes in large dryness, and returns to the capacity variable type compressor 1 and fixed capacity type compressors 2 through the four-way valve 3.

Since the electric expansion valves 9 in a cooling period or the motor expansion valves 5 in a heating period are controlled so that degrees of superheat of the inlet sides of the capacity variable type compressor 1 and fixed capacity type compressors 2 may be added a little, it never arises to become wet compression and to be inefficiently operated.

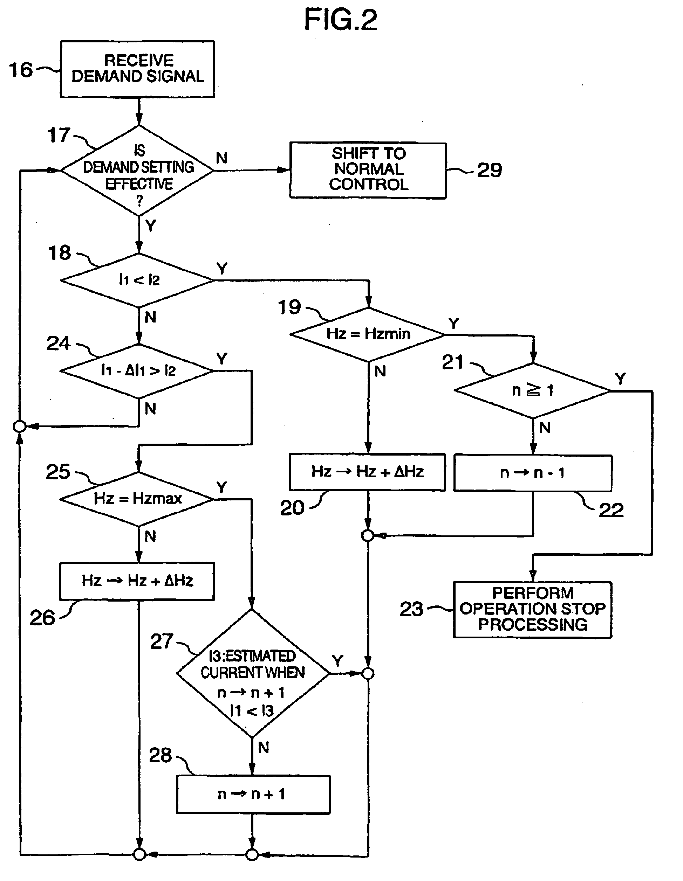

Fig. 2 is a flowchart of controlling the number of the compressors when power consumption is restricted. The operating capacity of the compressors is controlled by controlling capacity by changing the operation frequency of the capacity variable conversion compressor 1 by an inverter so that the consumed electric power set beforehand may not be exceeded, and operating the capacity variable conversion compressor 1 with combining with the fixed capacity type compressors 2.

The capacity variable type compressor 1 and fixed capacity type compressors 2 measure a current value with a current transformer, or estimate an operation current from a function or a table value for capacity by detecting high pressure and low pressure, and transmit a total current value of the air conditioner under operation to a control circuit.

In Fig. 2, when a demand signal is received (step 16) and power consumption limiting control becomes effective by an external input signal or the time set beforehand, an air conditioner current I2 under operation is compared with a current value I1 which is equivalent to a limited power consumption at steps 17 and 18. In the case of I1 < I2, the process shifts to step 19.

when a capacity variable value Hz of the variable capacity type compressor 1 is not a lower capacity variable limit Hzmin at step 19, the operating capacity of the variable capacity type compressor is reduced in a control range ΔHz per time of the capacity variable value at step 20 until I1 ≥ I2 holds. Then, if I1 < I2 even if Hz = Hzmin holds at step 19, the number of the fixed capacity type compressors is reduced by one from the current operating number n at step 21.

Even if a circulating amount of the refrigerant by the operation of the capacity variable type compressor 1 is reduced at step 20, the reduction of an operation current has time delay. Therefore, when Hz = Hzmin holds at step 19, a current value change is made smoother by waiting for a fixed time of about 30 seconds to one minute without decreasing the number immediately.

Operation within a limit of power consumption is achieved by repeating the above control until I1 ≥ I2 holds. In addition, when the capacity variable value Hz is the lower capacity variable limit Hzmin and all the current fixed capacity type compressors stop at step 21, shutdown processing is performed at step 23, and restart is performed. Hence, operation beyond the power consumption limit is prevented.

The fixed capacity type compressors 2 have discrete controllability to the capacity variable type compressor 1 because of controlling an operation current by the change of the operating number unlike the capacity variable type compressor 1. For this reason, I2 temporarily becomes much less than I1 by decreasing the number of the fixed capacity type compressors 2. Hence, the capacity of the capacity variable type compressor 1 is increased by the control range per time, ΔHz of the capacity variable value at step 26 until I1 - ΔI1 = I2 holds at step 24. Here, ΔI1 is a control parameter determined by the capacity of the air conditioner, or a variable range of the capacity variable type compressor 1.

When the full current value of the air conditioner falls by the change of an operating load or ambient temperature and I1 > I2 holds at step 18, the capacity of the capacity variable type compressor 1 is increased at step 26. When the variable value Hz of the capacity variable type compressor 1 becomes a maximum value Hzmax at step 25 and the estimated current 13 caused by increasing the operating number n of the fixed capacity type compressors 2 is I1 > I3, the operating number n of the fixed capacity type compressors 2 is increased by one at step 27. Then, in the case of I1 < I3, the operating number is not changed.

The above control is similarly performed even when the air conditioner is composed of only the capacity variable type compressors 1 or only the fixed capacity type compressors. Although continuous capacity control cannot be performed like the capacity variable type compressor 1 when all the compressors are constructed of the fixed capacity type compressors 2, it is possible to construct the air conditioner at low cost in comparison with using the capacity variable type compressor 1.

In addition, since a circulating amount of the refrigerant drops and an effect by the expansion equipment becomes small at the time of the above-mentioned control implementation, inlet pressure into the compressors becomes easy to rise. For this reason, since a ratio of compressor discharge pressure to inlet pressure becomes small, it is easy to generate a malfunction such as dropping of a supply amount of the circulating oil to the compressors. Therefore, in the state that an upper power consumption is restricted, expansion equipment (motor expansion valves) which is connected to the use side heat exchangers connected to the air conditioner and has ah variable throttle mechanism which can be set at an arbitrary throttling amount is provided, and a degree of opening of the expansion equipment is throttled by an amount equivalent to a reduced amount of the circulating amount. Thereby, the rise of the inlet pressure of the compressors can be suppressed.

Furthermore, the throttling amount of the expansion equipment directly acts to a refrigerant amount, distributed to each indoor unit, to the circulating amount of the refrigerant of the whole air conditioner. Hence, the larger a degree of opening of the expansion equipment is, the more the refrigerant flows, and hence, the degree of opening is proportional to air conditioning capacity. Then, it is possible to obtain the air conditioning capacity according to demand setting in the limited power consumption by not changing the throttling amount of the expansion equipment to the indoor units, whose air conditioning capacity is given priority, by performing demand setting beforehand, or lessening a throttle range in comparison with the indoor units with the low priority of air conditioning capacity by other demand setting. Hence, the reliability of the air conditioner, and the reduction of power consumption are compatible without spoiling amenity.

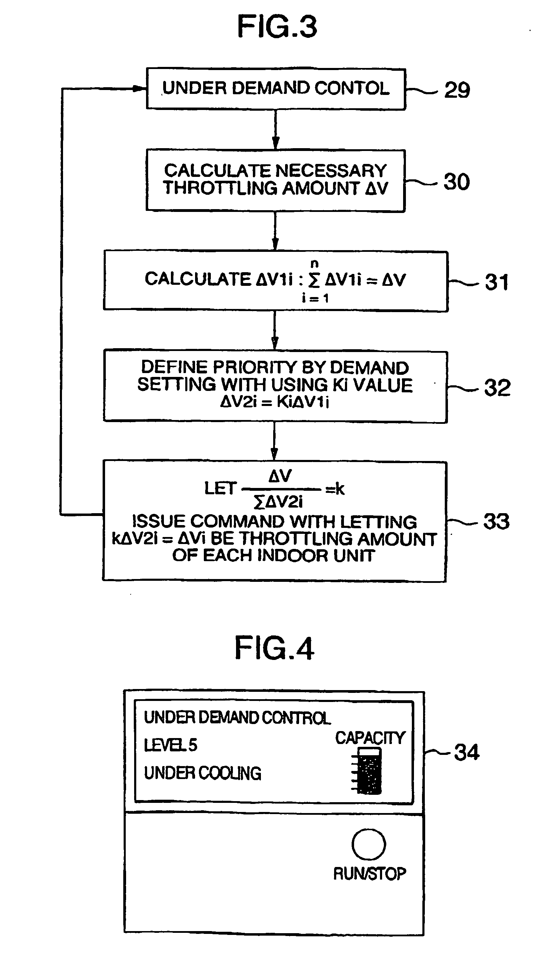

Fig. 3 shows a flowchart of controlling a throttling amount of the expansion equipment under demand control.

When the demand control which restricts the upper power consumption limit becomes effective at step 29, the capacity of the compressors is reduced and a circulating amount of the refrigerant is reduced as explained in Fig. 2. However, since the refrigerant decompressed by the electric expansion valves 9 means that the throttling amount is relatively reduced in comparison with the circulating amount of the refrigerant at usual time, a refrigerating cycle is stabilized by further throttling the motor expansion valves 9 by Δv at step 30. However, since the circulating amount of the refrigerant flowing in the indoor units 12 also relatively reduces, and hence, air conditioning capacity becomes small, priority by demand setting is set among the indoor units installed beforehand to cancel the reduce of amenity in each interior by the reduction of the air conditioning capacity of the whole air conditioner.

Normally, when the throttling amount of ΔV is necessary with totaling throttling amounts in all the indoor units like step 31, the throttling amount of ΔV is distributed from ΔV11 to ΔV1n according to the capacity of each motor expansion valve 9 of the indoor units, preset temperature, room temperature, and the like. Then, a coefficient Ki, which expresses the capacity priority defined by the demand setting, is determined at step 32, and redistribution by the priority of air conditioning capacity is performed among the indoor units. That is, the throttling amount ΔV2i in consideration of the priority of air conditioning capacity is set so that ΔV2i = Ki × ΔV1i may hold, and the air conditioning capacity which meets user's amenity most is achieved. At step 33, the sum total of the throttling amount ΔVi, which is commanded to each indoor unit, becomes ΔV by multiplying ΔV2i by a correction factor k defined by k = ΔV/(∑ΔV2i).

Thereby, it becomes possible to suppress the rise of inlet pressure of the compressors by decreasing compressor capacity, and to be compatible in reliability and amenity also at the time of restriction of power consumption.

Fig. 4 shows an example of displaying on a display unit of a remote control 34 for an indoor unit that demand control is operative, where displays the priority of each indoor unit as a number of level 5 and a bar graph of capacity at the time of the restriction of power consumption, explained in Fig. 3, by making the priority a demand level. Thereby, since a user can associate the air conditioning capacity by the current operational state of an indoor unit with the demand level and effective temperature, it becomes possible to perform the operation, which meets the amenity of an independent user, by adjusting the demand level.

In order to restrict an upper limit of a whole air conditioning apparatus in the case that a plurality of air conditioners each of which has a function of being able to set an upper limit of power consumption is installed, what is necessary is to set an upper limit of power consumption individually, and to make the totaled value of upper limits of power consumption less than the limiting value of power consumption of the whole air conditioning apparatus. In this case, since the control of lowering a circulating amount of a refrigerant in the whole air conditioning apparatus is implemented, amenity may be spoiled while the restriction of power consumption is implemented. In addition, when restricting power consumption in each air conditioner, errors between upper limits of power consumption and actual operational power consumption are accumulated, and hence, an error is enlarged when the air conditioning apparatus is large and the number of installations increases. At this time, the air conditioner which restricts the upper limit of power consumption rotates according to the time and order, which were set beforehand, among the conditioners.

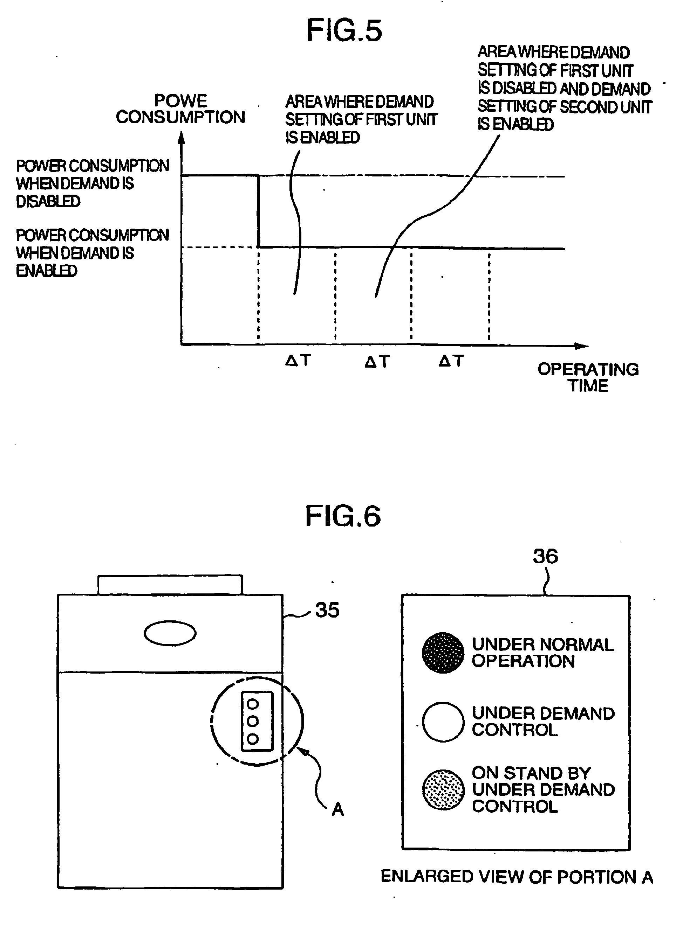

Fig. 5 shows an operating method in the case of installing a plurality of air conditioners, and rotating an air conditioner, which restricts power consumption, by turns. The air conditioner, which implements demand control, and air conditioners which do not implement the demand control are rotated every arbitrary setup time lest the indoor units with low priority should lower their capacity to achieve the reduction of power consumption of the whole air conditioning apparatus. Specifically, when demand control is not performed, power consumption becomes a value at the time of demand being disabled as shown in the left side in Fig. 5. Then, when the restriction of power consumption, i.e., demand setting of a first one out of a plurality of air conditioners is enabled, the power consumption at that time becomes a value at the time of demand being enabled in Fig. 5. Next, the demand setting of the first one is disabled after a predetermined period (ΔT hours), and the demand setting of a second one is enabled. Hereafter, the invalidation and validation of demand settings are repeated successively.

Fig. 6 shows an example of displaying on an outdoor unit under the implementation of demand control that it is under implementation. A display board 36 is provided in an easily visible position, for example, a portion upper than the center in a height direction, that is, a side end portion of a front of the outdoor unit 35. Respective control states such as "under normal operation", "under demand control", and "on standby under demand control" by the rotation control drawn in Fig. 5 are displayed from the top with being distinguished by lighting or blinking, and lights-out in the display board 36. Thereby, since a worker who performs checks and maintenance services can recognize a current operational state simply, it is possible to shorten the checkout time, and it is useful for the improvement in service. In addition, it becomes easy to perform the operational administration of energy saving operation and energy saving service of an air conditioner by transmitting this information to remote monitoring equipment such as an external centralized control system.

It should be further understood by those skilled in the art that although the foregoing description has been made on embodiments of the invention, the invention is not limited thereto and various changes and modifications may be made without departing from the scope of the invention as defined in the appended claims.

## Claims

1. An air conditioner in which an outdoor unit (13), having a plurality of compressors (1, 2), a four-way valve (3), heat source side heat exchangers (4), outdoor expanders (5), and outdoor blowers (8), and a plurality of indoor units (12), having motor expansion valves (9), use side heat exchangers (10), and indoor blowers (11), are connected with liquid connection piping (14) and gas connection piping (15), and which controls an operation frequency of said compressor (1), **characterized in that** an operation frequency of at least one of the plurality of compressors is reduced by a predetermined control range when an operating current of the air conditioner is larger than a current value based on an upper limit; and
an operating number of the remainder of the compressors is reduced when an operating current of the air conditioner is larger than the current value based on the upper limit of power consumption even if the frequency becomes a lower limit of the operation frequency.

2. Air conditioner according to claim 1, **characterized in that** the plurality of compressors comprises a variable capacity type compressor (1) and fixed capacity type compressors (2), wherein an operation frequency of the variable capacity type compressor is reduced by a predetermined control range when an operating current of the air conditioner is larger than a current value based on the upper limit, and then, an operating number of the fixed capacity type compressors is reduced.

3. Air conditioner according to claim 1 or 2, **characterized in that** the plurality of compressors comprises a variable capacity type compressor (1) and fixed capacity type compressors (2), wherein an operation frequency of the variable capacity type compressor is reduced by a predetermined control range when an operating current of the air conditioner is larger than a current value based on the upper limit, and then, an operating number of the fixed capacity type compressors is reduced after waiting for a given length of time.

4. Air conditioner according to claim 1, 2 or 3, **characterized in that** shut-down processing is performed when the operation frequency of the compressor whose operation frequency is reduced becomes a lower limit and all the remainder of the compressors are stopped.

5. Air conditioner according to at least one of the preceding claims, **characterized in that** when the air conditioner is operated with an upper limit of power consumption being set beforehand, degrees of opening of the motor expansion valves are made small in comparison with the case that an upper limit of power consumption is not set.

6. Air conditioner according to at least one of the preceding claims, **characterized in that** priority is given to the plurality of indoor units and degrees of opening of the motor expansion valves are enlarged as the priority of the indoor units is higher.

7. Air conditioner according to at least one of the preceding claims, **characterized in that** priority is given to the plurality of indoor units and the priority is expressed as a demand level.

8. Air conditioner according to at least one of the preceding claims, **characterized in that** the plurality of air conditioners is installed, at least one of the plurality of air conditioners is operated with an upper limit of power consumption being set beforehand, and the air conditioner which is operated with the upper limit being set rotates in turn.

9. Air conditioner according to at least one of the preceding claims, **characterized in that** the plurality of air conditioners is installed, and it is indicated that it is under operation with an upper limit of power consumption being set beforehand.

## Patentansprüche

1. Eine Klimaanlage, in der eine außenseitige Einheit (13), die eine Mehrzahl von Kompressoren (1, 2), ein Vierwegeventil (3), hitzequellenseitige Hitzeaustauscher (4), außenseitige Expander (5) und außenseitige Lüfter (8) hat, und eine Mehrzahl von innenseitigen Einheiten (12), die Motorexpansionsventile (9), nutzungsseitige Hitzeaustauscher (10) und innenseitige Lüfter (11) haben, verbunden sind mit einem Flüssigkeitsverbindungsleitungssystem (14) und einem Gasverbindungsleitungssystem (15) und die eine Betriebsfrequenz des Kompressors (1) steuert,
**dadurch gekennzeichnet, dass**
eine Betriebsfrequenz von mindestens einem der Mehrzahl der Kompressoren um einen vorbestimmten Steuerbereich reduziert wird, wenn ein Betriebsstrom der Klimaanlage größer ist als ein Stromwert basierend auf einem oberen Grenzwert; und eine Betriebsanzahl des Rests der Kompressoren reduziert wird, wenn ein Betriebsstrom der Klimaanlage größer ist als ein Stromwert basierend auf dem oberen Energieverbrauchsgrenzwert, selbst wenn die Frequenz einen unteren Grenzwert der Betriebsfrequenz annimmt.

2. Klimaanlage nach Anspruch 1, **dadurch gekennzeichnet, dass** die Mehrzahl von Kompressoren einen Kompressor des variablen Kapazitätstyps (1) und Kompressoren des festgelegten Kapazitätstyps (2) umfasst, wobei eine Betriebsfrequenz des Kompressors des variablen Kapazitätstyps um einen vorbestimmten Steuerbereich reduziert wird, wenn ein Betriebsstrom der Klimaanlage größer ist als ein Stromwert basierend auf dem oberen Grenzwert, und dann eine Betriebsanzahl der Kompressoren des festgelegten Kapazitätstyps reduziert wird.

3. Klimaanlage nach Anspruch 1 oder 2, **dadurch gekennzeichnet, dass** die Mehrzahl von Kompressoren einen Kompressor des variablen Kapazitätstyps (1) und Kompressoren des festgelegten Kapazitätstyps (2) umfasst, wobei eine Betriebsfrequenz des Kompressors des variablen Kapazitätstyps um einen vorbestimmten Steuerbereich reduziert wird, wenn ein Betriebsstrom der Klimaanlage größer ist als ein Stromwert basierend auf dem oberen Grenzwert, und dann eine Betriebsanzahl der Kompressoren des festgelegten Kapazitätstyps reduziert wird, nachdem eine gegebene Zeitlänge gewartet wurde.

4. Klimaanlage nach Anspruch 1, 2 oder 3, **dadurch gekennzeichnet, dass** eine Abschaltprozedur ausgeführt wird, wenn die Betriebsfrequenz des Kompressors, dessen Betriebsfrequenz reduziert wird, einen unteren Grenzwert annimmt und der Rest der Kompressoren angehalten wird.

5. Klimaanlage nach zumindest einem der vorhergehenden Ansprüche, **dadurch gekennzeichnet, dass**, wenn die Klimaanlage betrieben wird mit einem oberen Energieverbrauchsgrenzwert, der vorher gesetzt wurde, die Öffnungsausmaße der Motorexpansionsventile klein gemacht werden im Vergleich mit dem Fall, dass ein oberer Energieverbrauchsgrenzwert nicht gesetzt wurde.

6. Klimaanlage nach zumindest einem der vorhergehenden Ansprüche, **dadurch gekennzeichnet, dass** der Mehrzahl der innenseitigen Einheiten Prioritäten zugeordnet werden und die Öffnungsausmaße der Motorexpansionsventile vergrößert werden, wenn die Priorität der innenseitigen Einheiten höher ist.

7. Klimaanlage nach zumindest einem der vorhergehenden Ansprüche, **dadurch gekennzeichnet, dass** der Mehrzahl der innenseitigen Einheiten Priorität zugeordnet wird und dass die Priorität als ein Bedarfsniveau ausgedrückt wird.

8. Klimaanlage nach zumindest einem der vorhergehenden Ansprüche, **dadurch gekennzeichnet, dass** die Mehrzahl der Klimaanlagen installiert ist, mindestens eine der Mehrzahl der Klimaanlagen betrieben wird mit einem oberen Energieverbrauchsgrenzwert, der vorher festgelegt wurde, und dass die Klimaanlage, die mit dem festgelegten, oberen Grenzwert betrieben wird, im Turnus wechselt.

9. Klimaanlage nach zumindest einem der vorhergehenden Ansprüche, **dadurch gekennzeichnet, dass** die Mehrzahl der Klimaanlagen installiert ist, und dass es angezeigt wird, dass sie in Betrieb ist mit einem oberen Energieverbrauchsgrenzwert, der vorher festgelegt wurde.

## Revendications

1. Un conditionneur d'air dans lequel une unité extérieure (13) possédant une pluralité de compresseurs (1, 2), un distributeur progressif à quatre voies (3), des échangeurs de chaleur du côté de la source de chaleur (4), des expanseurs extérieurs (5) et des souffleurs extérieurs (8), et une pluralité d'unités intérieures (12) possédant des vannes de détente du moteur (9), des échangeurs de chaleur du côté de l'utilisation (10) et des souffleurs intérieurs (11) sont connectés avec une tuyauterie de connexion de liquide (14) et une tuyauterie de connexion de gaz (15), et qui contrôle une fréquence de fonctionnement dudit compresseur (1),
**caractérisé en ce qu'**
une fréquence de fonctionnement d'au moins un compresseur parmi la pluralité de compresseurs est réduite d'une plage de réglage déterminée à l'avance quand un courant de fonctionnement du conditionneur d'air est plus important qu'une valeur de courant basée sur une limite supérieure ; et
un nombre de compresseurs en marche parmi le reste des compresseurs est réduit quand un courant de fonctionnement du conditionneur d'air est plus important que la valeur de courant basée sur la limite supérieure de consommation d'électricité même si la fréquence atteint une limite inférieure de la fréquence de fonctionnement.

2. Un conditionneur d'air selon la revendication 1, **caractérisé en ce que** la pluralité de compresseurs comprend un compresseur de type à cylindrée variable (1) et des compresseurs de type à cylindrée fixe (2), en réduisant une fréquence de fonctionnement du compresseur de type à cylindrée variable d'une plage de réglage déterminée à l'avance quand un courant de fonctionnement du conditionneur d'air est plus important qu'une valeur de courant basée sur la limite supérieure, et ensuite, un nombre de compresseurs en marche parmi les compresseurs de type à cylindrée fïxe est réduit.

3. Un conditionneur d'air selon la revendication 1 ou 2, **caractérisé en ce que** la pluralité de compresseurs comprend un compresseur de type à cylindrée variable (1) et des compresseurs de type à cylindrée fixe (2), en réduisant une fréquence de fonctionnement du compresseur de type à cylindrée variable d'une plage de réglage déterminée à l'avance quand un courant de fonctionnement du conditionneur d'air est plus important qu'une valeur de courant basée sur la limite supérieure, et ensuite, un nombre de compresseurs en marche parmi les compresseurs de type à cylindrée fixe est réduit après avoir attendu pendant une durée de temps donnée.

4. Un conditionneur d'air selon la revendication 1, 2 ou 3, **caractérisé en ce que** le processus d'interruption est effectué quand la fréquence de fonctionnement du compresseur dont la fréquence de fonctionnement est réduite atteint une limite inférieure et quand le reste des compresseurs est arrêté.

5. Un conditionneur d'air selon au moins l'une des revendications précédentes, **caractérisé en ce que**, lorsque le conditionneur d'air fonctionne avec une limite supérieure de consommation d'électricité déterminée à l'avance, les degrés d'ouverture des vannes de détente du moteur sont réduits par rapport au cas où une limite supérieure de consommation d'électricité n'est pas déterminée.

6. Un conditionneur d'air selon au moins l'une des revendications précédentes, **caractérisé en ce que** la priorité est donnée à la pluralité d'unités intérieures et que les degrés d'ouverture des vannes de détente du moteur sont augmentés au fur et à mesure que la priorité des unités intérieures augmente.

7. Un conditionneur d'air selon au moins l'une des revendications précédentes, **caractérisé en ce que** la priorité est donnée à la pluralité d'unités intérieures et que la priorité est exprimée comme un niveau de demande.

8. Un conditionneur d'air selon au moins l'une des revendications précédentes, **caractérisé en ce que** la pluralité de conditionneurs d'air est installée, qu'au moins l'un des conditionneurs parmi les conditionneurs d'air fonctionne avec une limite supérieure de consommation d'électricité déterminée au préalable, et que le conditionneur d'air qui fonctionne avec la limite supérieure déterminée tourne à son tour.

9. Un conditionneur d'air selon au moins l'une des revendications précédentes, **caractérisé en ce que** la pluralité de conditionneurs d'air est installée et qu'il est indiqué qu'elle fonctionne avec une limite supérieure de consommation d'électricité déterminée à l'avance.
